(19) Europäisches Patentamt / European Patent Office / Office européen des brevets

(11) **EP 3 230 713 B1**

(12) **FASCICULE DE BREVET EUROPEEN**

(45) Date de publication et mention
de la délivrance du brevet:
**29.07.2020 Bulletin 2020/31**

(51) Int Cl.:
***G01N 15/14*** *(2006.01)*     ***G03H 1/08*** *(2006.01)*
***G06K 9/20*** *(2006.01)*

(21) Numéro de dépôt: **15807840.2**

(86) Numéro de dépôt international:
**PCT/EP2015/078673**

(22) Date de dépôt: **04.12.2015**

(87) Numéro de publication internationale:
**WO 2016/091749 (16.06.2016 Gazette 2016/24)**

(54) **PROCÉDÉ D'OBTENTION D'UNE IMAGE D'UN ÉCHANTILLON, ET SYSTÈME ASSOCIÉ D'IMAGERIE SANS LENTILLE**

VERFAHREN ZUR ERZEUGUNG EINES BILDES EINER PROBE UND ZUGEHÖRIGES LINSENFREIES BILDGEBUNGSSYSTEM

METHOD FOR OBTAINING AN IMAGE OF A SAMPLE, AND ASSOCIATED LENS-FREE IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2014 FR 1462128**

(43) Date de publication de la demande:
**18.10.2017 Bulletin 2017/42**

(73) Titulaires:
• **Commissariat à l'Energie Atomique et aux Energies Alternatives**
**75015 Paris (FR)**
• **Iprasense SAS**
**34830 Clapiers (FR)**

(72) Inventeurs:
• **BORDY, Thomas**
**38000 Grenoble (FR)**
• **ESTEBAN, Geoffrey**
**34820 Teyran (FR)**
• **MOREL, Sophie**
**38000 Grenoble (FR)**

(74) Mandataire: **Lavoix**
**2, place d'Estienne d'Orves**
**75441 Paris Cedex 09 (FR)**

(56) Documents cités:
**WO-A1-2011/049965     WO-A1-2014/012031**
**US-A1- 2012 248 292     US-A1- 2013 301 093**

• **GARCIA-SUCERQUIA J ET AL: "DIGITAL IN-LINE HOLOGRAPHIC MICROSCOPY", APPLIED OPTICS, OPTICAL SOCIETY OF AMERICA, WASHINGTON, DC; US, vol. 45, no. 5, 10 février 2006 (2006-02-10), pages 836-850, XP001239175, ISSN: 0003-6935, DOI: 10.1364/AO.45.000836**

EP 3 230 713 B1

## Description

La présente invention concerne un procédé d'obtention d'une image d'un échantillon à l'aide d'un système d'imagerie sans lentille. Le système d'imagerie comprend au moins une source lumineuse, un support d'échantillon configuré pour recevoir l'échantillon et un photodétecteur matriciel, le support d'échantillon étant disposé entre chaque source lumineuse et le photodétecteur matriciel.

Le procédé d'obtention comprend les étapes suivantes :

- a) l'émission, depuis une position d'émission par rapport au support d'échantillon, d'un faisceau lumineux d'éclairement de l'échantillon selon une direction d'éclairement, à l'aide d'une source lumineuse correspondante ; et
- b) l'acquisition de plusieurs images successives de l'échantillon à l'aide du photodétecteur matriciel, chaque image étant formée par un rayonnement transmis par l'échantillon éclairé et comportant au moins une figure de diffraction élémentaire, chaque figure de diffraction élémentaire correspondant à des ondes diffractées lors de l'éclairement de l'échantillon, chaque image acquise correspondant à une position respective d'émission du faisceau lumineux, les différentes positions d'émission étant décalées les unes par rapport aux autres selon une direction perpendiculaire à la direction d'éclairement.

On connaît un tel procédé du document EP 2 122 326 B1. Ce document décrit un appareil et un procédé pour détecter des cellules biologiques ou des bactéries dans un échantillon. L'appareil comprend plusieurs sources lumineuses décalées les unes par rapport aux autres et un capteur CCD pour acquérir des images de l'échantillon, chaque image acquise comportant des motifs de diffraction générés par les cellules biologiques. Le décalage de la position de ces sources lumineuses et les différentes images acquises sont utilisés pour calculer la hauteur des cellules placées devant le capteur CCD.

US 2012/0248292 A1 décrit un système d'imagerie sans lentille comprenant un support d'échantillon, une source lumineuse d'émission d'un faisceau lumineux d'éclairement de l'échantillon depuis différentes positions d'émission décalées les unes par rapport aux autres selon une direction perpendiculaire à la direction d'éclairement, un capteur d'images successives de l'échantillon éclairé, chaque image acquise correspondant à une position respective d'émission du faisceau lumineux.

WO2014012031 décrit un appareil et un procédé pour détecter de échantillon biologiques avec un système d'imagerie sans lentille comprenant une émission d'un faisceau lumineux d'éclairement de l'échantillon depuis différents positions d'émission et décrit, généralement, une élimination des artefacts dans les images.

Toutefois, la détection de particules, dans l'échantillon, est parfois délicate, voire impossible, du fait de la présence d'artéfacts lumineux sur l'image.

Le but de l'invention est alors de proposer un procédé d'obtention d'une image d'un échantillon, et un système d'imagerie associé, permettant d'obtenir une image de meilleure qualité, ce qui facilite ensuite notamment la détection de particules contenues dans l'échantillon.

À cet effet, l'invention a pour objet un procédé selon la revendication 1.

Le procédé selon l'invention permet alors d'obtenir une image résultante de meilleure qualité, l'image résultante comportant très peu d'artefacts lumineux, voire étant exempte de tout artefact lumineux. Ces artefacts lumineux sont, par exemple, dus à la lumière guidée dans des parois du support d'échantillon ou bien à la lumière réfractée par l'échantillon contenu dans le support d'échantillon. Ils apparaissent généralement dans l'image acquise par le photodétecteur matriciel, lorsque cette dernière correspond à une image de l'ensemble de l'échantillon.

Le fait de calculer l'image résultante à partir des différentes images acquises pour différentes positions d'émission du faisceau lumineux permet alors de réduire, voire de supprimer, la présence d'artefacts lumineux dans l'image résultante. En effet, les artefacts lumineux sont situés en des endroits distincts d'une image acquise à l'autre, de par le décalage, selon une direction perpendiculaire à la direction d'éclairement, des différentes positions d'émission du faisceau lumineux.

Suivant d'autres aspects avantageux de l'invention, le procédé d'obtention est selon l'une quelconque des revendications 2 à 7.

L'invention a également pour objet un système d'imagerie selon la revendication 8.

Suivant d'autres aspects avantageux de l'invention, le système d'imagerie est selon l'une quelconque des revendications 9 à 13.

Ces caractéristiques et avantages de l'invention apparaitront à la lecture de la description qui va suivre, donnée uniquement à titre d'exemple non limitatif, et faite en référence aux dessins annexés, sur lesquels :

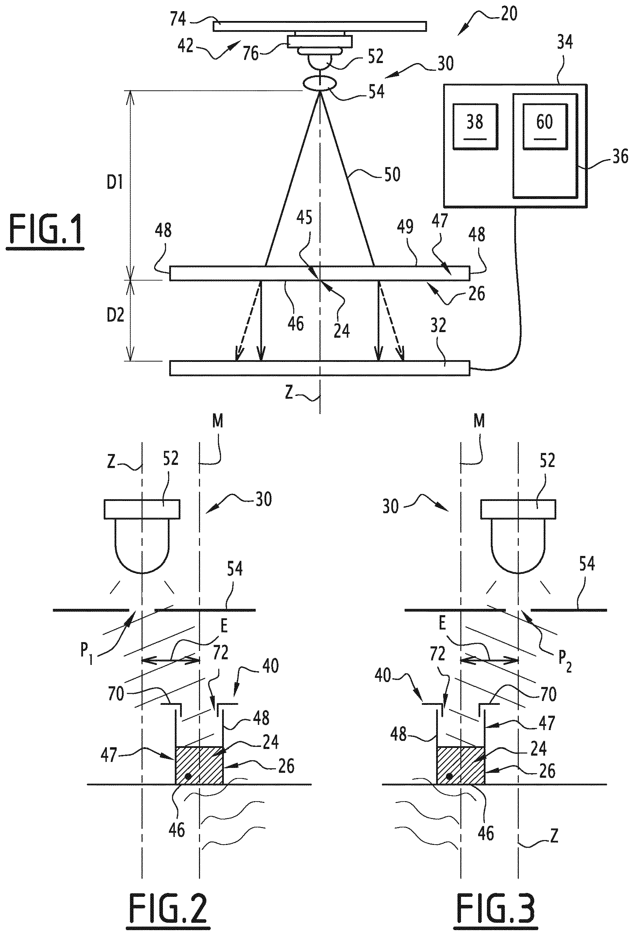

- la figure 1 est une représentation très schématique d'un système d'imagerie selon l'invention, comprenant une source lumineuse configurée pour émettre, depuis une position d'émission, un faisceau lumineux d'éclairement de l'échantillon, un support d'échantillon configuré pour recevoir l'échantillon, un photodétecteur matriciel configuré pour acquérir plusieurs images successives de l'échantillon éclairé, chaque image acquise correspondant à une position respective d'émission du faisceau lumineux, et une unité de traitement d'informations configurée pour calculer une image résultante de l'échantillon à partir des différentes images acquises par le photodétecteur matriciel ;

- la figure 2 est une vue très schématique illustrant l'émission du faisceau lumineux depuis une première position d'émission ;
- la figure 3 est une vue analogue à celle de la figure 2 avec l'émission du faisceau lumineux depuis une deuxième position d'émission ;
- la figure 4 est un organigramme d'un procédé d'obtention selon l'invention ;
- la figure 5 est une vue d'une première acquise par le photodétecteur matriciel du système d'imagerie de la figure 1, avec l'émission du faisceau lumineux depuis la première position d'émission ;
- la figure 6 est une vue d'une deuxième image acquise par ledit photodétecteur matriciel, avec l'émission du faisceau lumineux depuis la deuxième position d'émission ;
- la figure 7 est une vue de l'image résultante calculée à partir des première et deuxième images acquises des figures 5 et 6 ; et
- la figure 8 est une vue analogue à celle de la figure 7, obtenue après le masquage préalable d'une paroi latérale du support d'échantillon du système d'imagerie de la figure 1.

De façon conventionnelle, dans la présente demande, l'expression « sensiblement égale à » exprimera une relation d'égalité à plus ou moins 10%, de préférence à plus ou moins 5%.

Sur la figure 1, un système 20 d'imagerie d'un échantillon 24 comprend un support d'échantillon 26 adapté pour recevoir l'échantillon 24. Le système d'imagerie 20 comprend également au moins une source lumineuse 30 d'éclairement de l'échantillon 24 et un photodétecteur matriciel 32 adapté pour acquérir plusieurs images successives de l'échantillon éclairé 24.

Le système d'imagerie 20 est, de manière générale, adapté pour acquérir plusieurs images de l'échantillon 24 via une méthodologie par imagerie sans lentille, le photodétecteur matriciel 32 ne comportant pas d'optique de grossissement.

Le système d'imagerie 20 comprend également une unité de traitement d'informations 34 comportant une mémoire 36 et un processeur 38 associé à la mémoire 36.

En complément facultatif, le système d'imagerie 20 comprend en outre un masque 40, visible sur les figures 2 et 3, interposé entre la ou chaque source lumineuse 30 et l'échantillon 24.

Dans l'exemple de réalisation de la figure 1, le système d'imagerie 20 comprend une unique source lumineuse 30, et comporte alors en outre un dispositif 42 de déplacement de ladite source lumineuse 30.

En variante non représentée, le système d'imagerie 20 comprend plusieurs sources lumineuses 30, celles-ci étant configurées pour éclairer l'échantillon 24 successivement, c'est-à-dire de manière échelonnée dans le temps.

L'échantillon 24 comporte des particules 45, dites particules diffractantes dans la suite de la description, chaque particule 45 étant propre à engendrer des ondes diffractées lors de l'éclairement de l'échantillon 24.

L'échantillon 24 est, par exemple, un liquide, tel qu'un liquide corporel ayant été prélevé au préalable sur un patient, l'étape de prélèvement ne faisant pas partie du périmètre de l'invention. L'échantillon 24 comporte par exemple du liquide céphalo-rachidien ou encore du sang. L'échantillon 24 peut être un milieu de culture cellulaire, comportant une ou plusieurs cellules.

D'une façon générale, l'échantillon est un substrat transparent, solide ou liquide, comportant des particules dont le diamètre ou la plus grande taille est préférentiellement comprise entre 100 nm et 1mm, de préférence entre $1\mu m$ à 500 $\mu m$.

Les particules diffractantes 45 sont, par exemple, des particules biologiques, c'est-à-dire des cellules (notamment des cellules sanguines et par exemple des globules blancs ou des globules rouges), des bactéries ou colonies bactériennes, d'autres microorganismes de type champignons, levures ou encore des agrégats de cellules.

En variante, les particules diffractantes 45 sont des microbilles, des poussières, des impuretés des pollens ou encore des aspérités de surface de l'échantillon 24.

Le support d'échantillon 26 est disposé entre la ou chaque source lumineuse 30 et le photodétecteur matriciel 32, et est sensiblement perpendiculaire à une direction verticale Z correspondant à la direction d'éclairement de l'échantillon 24 par la source lumineuse 30, comme représenté sur la figure 1.

Le support d'échantillon 26 comprend une surface transparente 46, réalisée par exemple en verre ou en plastique. Dans cet exemple, le support d'échantillon 26 comprend le puits 47 d'une plaque à puits. Le puits 47 a ici une fonction de confinement de l'échantillon 24. Il est adapté pour être déposé directement sur le photodétecteur matriciel 32, ou à faible distance de ce dernier, la distance entre le support 26 et le détecteur étant généralement inférieure à 1 cm. Le puits 47 comporte, en plus du fond formant la surface transparente 46, une paroi latérale 48, et en complément optionnel, un couvercle 49 afin de protéger l'échantillon 24.

La source lumineuse 30 est adaptée pour émettre, depuis une position d'émission $P_1$, $P_2$, ..., $P_N$, un faisceau lumineux 50 selon la direction verticale Z afin d'éclairer l'échantillon 24 comportant les particules diffractantes 45.

Par position d'émission, on entend une position d'émission relative de la source par rapport au support. Ainsi, deux positions d'émission différentes peuvent être obtenues :

- soit en déplaçant l'échantillon 26 par rapport à une source lumineuse 30,
- soit en déplaçant une source lumineuse 30 par rapport à l'échantillon 26, ou
- soit en activant successivement deux sources lumineuses espacées l'une de l'autre, c'est-à-dire occupant deux positions différentes relativement à l'échantillon.

Selon un mode de réalisation, les positions $P_1$, $P_2$, ..., $P_N$ d'émission du faisceau lumineux 50 sont décalées les unes par rapport aux autres selon une direction perpendiculaire à la direction d'éclairement, c'est-à-dire selon une direction perpendiculaire à la direction verticale Z dans l'exemple des figures 1 à 3.

Les positions d'émission $P_1$, $P_2$, ..., $P_N$ sont distinctes les unes des autres, et N qui représente le nombre de positions d'émission $P_1$, $P_2$, ..., $P_N$ est un nombre entier prédéterminé supérieur ou égal à 2. Dans l'exemple des figures 2 et 3, seules deux positions d'émission $P_1$, $P_2$ sont représentées, N étant égal à 2Les différentes positions d'émission $P_1$, $P_2$, ..., $P_N$ peuvent être régulièrement espacées selon la direction perpendiculaire à la direction d'éclairement, et l'homme du métier comprendra bien entendu que cette caractéristique correspond au cas où le nombre N de positions d'émission $P_1$, $P_2$, ..., $P_N$ est supérieur ou égal à 3. Le terme régulièrement espacé désigne le fait que la distance entre chaque position $P_1$, $P_2$, ..., $P_N$ est constante.

Les différentes positions d'émission $P_1$, $P_2$, ..., $P_N$ sont de préférence décalées par paire(s), et les deux positions de chaque paire respective sont décalées de manière symétrique par rapport à un axe M passant sensiblement par le milieu de l'échantillon 24 et parallèle à la direction d'éclairement Z. Dans l'exemple de réalisation des figures 2 et 3, les deux positions $P_1$, $P_2$ formant une paire correspondante sont décalées, et plus particulièrement positionnées, de manière symétrique par rapport audit axe M, l'espacement E entre la position respective $P_1$, $P_2$ et l'axe M étant égal d'une position à l'autre.

L'homme du métier comprendra que le décalage des deux positions de chaque paire respective par rapport à l'axe M n'est pas nécessairement symétrique, le décalage de manière symétrique des deux positions de chaque paire respective étant un aspect complémentaire avantageux du décalage par paire des positions d'émission $P_1$, $P_2$, ..., $P_N$. Autrement dit, cette notion de symétrie par rapport à l'axe M est un exemple, parmi d'autres, de déplacement des positions d'émission $P_1$, $P_2$, ..., $P_N$.

En variante, les deux positions de chaque paire respective sont décalées de manière dissymétrique par rapport à l'axe M.

Lorsque le système d'imagerie 20 comprend une source lumineuse 30, le décalage des positions d'émission $P_1$, $P_2$, ..., $P_N$ selon ladite direction perpendiculaire à la direction d'éclairement est obtenu en déplaçant ladite source lumineuse 30 à l'aide du dispositif de déplacement 42.

En variante, lorsque le système d'imagerie 20 comprend plusieurs sources lumineuses 30, le décalage des positions d'émission $P_1$, $P_2$, ..., $P_N$ selon ladite direction perpendiculaire à la direction d'éclairement est obtenu en commandant successivement les différentes sources lumineuses 30 afin qu'elles émettent leur faisceau lumineux respectif 50 de manière échelonnée dans le temps. En complément facultatif de cette variante, le décalage des positions d'émission $P_1$, $P_2$, ..., $P_N$ est également obtenu en déplaçant une ou plusieurs desdites sources lumineuses 30 à l'aide d'un dispositif de déplacement 42 correspondant, pour chaque source lumineuse 30 à déplacer.

Selon un autre mode de réalisation le support d'échantillon est déplacé de façon à occuper successivement plusieurs positions $P_1$, $P_2$, ..., $P_N$ par rapport à une source lumineuse 30. Ces positions $P_1$, $P_2$...$P_N$ sont de préférence régulièrement espacées dans une direction perpendiculaire à la direction d'éclairement Z de ladite source lumineuse.

La source lumineuse 30 est disposée à une première distance D1 de la lame transparente 46 selon la direction d'éclairement, correspondant dans l'exemple de la figure 1 à la direction verticale Z. La première distance D1 présente, de préférence, une valeur comprise entre 1 cm et 30 cm, de préférence comprise entre 3 cm et 20 cm, de préférence comprise entre 3 cm et 10 cm, de préférence encore sensiblement égale à 5 cm. La première distance D1 correspond à la distance entre la source lumineuse 30 et le support d'échantillon 26 selon la direction d'éclairement, et plus précisément à la distance entre le diaphragme 54 et la lame 46 selon cette direction d'éclairement.

La source lumineuse 30 est de préférence spatialement cohérente et de préférence monochromatique. Le terme monochromatique désigne une largeur spectrale inférieure à 80 nm, de préférence inférieure à 50 nm à mi-hauteur. L'invention s'applique par ailleurs lorsque la source est une source de lumière blanche.

La source lumineuse 30 comporte une diode électroluminescente 52, également appelée LED (de l'anglais *Light Emetting Diode*), et un diaphragme 54, comme représenté de manière schématique sur la figure 1. Le diaphragme 54 est également appelé sténopé (de l'anglais *pinhole*). Le diaphragme 54 a un diamètre compris entre 50 $\mu$m et 500 $\mu$m, de préférence sensiblement égal à 150 $\mu$m. Cela permet d'augmenter la cohérence spatiale du rayonnement lumineux. La LED 52 présente par exemple une longueur d'ondes sensiblement égale à 617 nm. Selon cet exemple de

réalisation, chaque position $P_1$, $P_2$, ..., $P_N$ d'émission du faisceau lumineux 50 correspond alors à la position du diaphragme 54, en particulier de son centre.

En variante, la source de lumière 30 est constituée de la diode électroluminescente 52, et ne comporte pas de diaphragme. La diode électroluminescente 52 présente alors des dimensions suffisamment réduites pour être considérée comme spatialement cohérente, le diamètre de la diode électroluminescente 52 étant alors par exemple inférieur au dixième de la première distance D1. Selon cet exemple de réalisation, chaque position $P_1$, $P_2$, ..., $P_N$ d'émission du faisceau lumineux 50 correspond alors à la position de la diode électroluminescente 52.

En variante encore, la source de lumière 30 est une source de lumière spatialement et temporellement cohérente, par exemple une diode laser ou encore une diode laser de type VCSEL (de l'anglais *Vertical Cavity Surface Emetting Laser*). Selon cet exemple de réalisation, chaque position $P_1$, $P_2$, ..., $P_N$ d'émission du faisceau lumineux 50 correspond alors à la position de la diode laser.

Le photodétecteur matriciel 32 est adapté pour acquérir des images successives du rayonnement transmis par l'échantillon 24 contenant les particules diffractantes 45, éclairé par le faisceau lumineux 50. Par rayonnement transmis, on entend le rayonnement traversant l'échantillon 24 de telle sorte que le photodétecteur matriciel 32 et la source lumineuse 30 sont situés de part et d'autre de l'échantillon 24 comportant les particules diffractantes 45.

Le photodétecteur matriciel 32 est un capteur d'images en deux dimensions, à savoir dans un plan sensiblement perpendiculaire à l'axe vertical Z. Le photodétecteur matriciel 32 est un capteur d'image pixélisé, par exemple un capteur CMOS (de l'anglais *Complementary Metal Oxyde Semiconductor*). En variante, le photodétecteur matriciel 32 est un capteur CCD (de l'anglais *Charge Coupled Device*).

Le photodétecteur matriciel 32 comporte une pluralité de pixels, non représentés, chacun présentant des dimensions inférieures ou égales à 10 $\mu$m, et de préférence inférieures à 5 $\mu$m, et encore de préférence inférieures à 2 $\mu$m. La réduction de la taille des pixels permet d'améliorer la résolution spatiale.

Le photodétecteur matriciel 32 peut comporter en complément des microlentilles, non représentées, chaque microlentille étant disposée au-dessus d'un pixel correspondant. De telles microlentilles sont intégrées au capteur et permettent d'améliorer le rendement de collecte, sans pour autant former une optique de grossissement disposée entre le support d'échantillon 26 et le photodétecteur 32.

Les images acquises par le photodétecteur matriciel 32 sont formées par le rayonnement transmis directement par l'échantillon éclairé 24, en l'absence d'optique de grossissement disposée entre le support d'échantillon 26 et le photodétecteur matriciel 32. Le photodétecteur 32 est également appelé dispositif d'imagerie sans lentille, et est apte à former une image de l'échantillon 24, tout en étant placé à une faible distance de ce dernier. Par faible distance, on entend une distance inférieure à quelques centimètres, de préférence inférieure à 1 cm. Le photodétecteur 32 est disposé à une deuxième distance D2 de la lame transparente 46 selon la direction d'éclairement, et la deuxième distance D2 est alors inférieure à quelques centimètres, de préférence inférieure à 1 cm.

Le fait de privilégier une faible valeur pour la deuxième distance D2, c'est-à-dire une faible distance entre le photodétecteur matriciel 30 et le support d'échantillon 26, permet de limiter les phénomènes d'interférence entre différentes figures de diffraction lorsque l'échantillon 24 est éclairé.

Le photodétecteur matriciel 32 est alors propre réaliser une image d'au moins une figure de diffraction élémentaire transmise par l'échantillon 24, chaque figure de diffraction élémentaire correspondant à des ondes diffractées par une particule diffractante 45, lors de l'éclairement du échantillon 24. Ainsi, le photodétecteur matriciel 32 permet d'obtenir une image $I_n$ comportant une ou plusieurs figures de diffraction élémentaires.

Chaque image acquise $I_n$ par le photodétecteur matriciel 32 comporte une pluralité de pixels $I_n(x,y)$, chacun étant repéré par une abscisse x et une ordonnée y dans l'image et le photodétecteur matriciel 32 est adapté pour mesurer l'intensité $I(x,y)$ de chaque pixel.

Chaque image acquise $I_n$ correspond à une position respective $P_1$, $P_2$, ..., $P_N$, d'émission du faisceau lumineux 50 par rapport au support d'échantillon 26, les différentes positions d'émission $P_1$, $P_2$, ..., $P_N$, étant décalées les unes par rapport aux autres selon la direction perpendiculaire à la direction d'éclairement Z.

La mémoire 36 est apte à stocker un logiciel 60 de calcul d'une image résultante $I_R$ de l'échantillon 24, à partir des différents d'images acquises $I_1$, $I_2$, ..., $I_N$, où N est le nombre de positions d'émission, relativement au support 26, $P_1$, $P_2$, ..., $P_N$.

Le processeur 38 est adapté pour exécuter le logiciel de calcul 60.

Selon le complément facultatif, le masque 40 comprend une partie opaque 70, la partie opaque 70 délimitant une ouverture 72. Le masque 40 est alors disposé entre la source lumineuse 30 et chaque échantillon 24. L'ouverture 72 du masque 40 est placée en vis-à-vis de l'échantillon 24. La partie opaque 70 est disposée, entre l'échantillon 24 et la ou chaque source lumineuse 30, de façon à recouvrir au moins partiellement la paroi latérale 48 du support d'échantillon 26. La partie opaque 70 est propre à être agencée spatialement pour empêcher que la paroi latérale 48 soit illuminée par une partie du faisceau lumineux émis 50 n'ayant pas interagi avec l'échantillon 24.

Le masque 40 sert à limiter des artefacts d'illumination introduits par l'illumination du support d'échantillon 26, en particulier de sa paroi latérale 48. La présence du masque 40 empêche la propagation de lumière dans la paroi latérale 48, ce qui permet d'éviter la formation de lumière parasite. Il en résulte une augmentation du rapport signal sur bruit.

Le masque 40 est, selon l'exemple des figures 2 et 3, en papier aluminium. D'autres matières opaques au faisceau 50 émis par la source lumineuse 30 sont envisageables pour le masque 40.

Selon une variante, le masque 40 est intégré au couvercle 49, et le couvercle 49 présente alors ladite partie opaque 70, délimitant une zone transparente, de telle sorte que la zone transparente est en vis-à-vis du contenu du support d'échantillon 26, tandis que la partie opaque 70 recouvre au moins partiellement la paroi latérale 48 s'étendant perpendiculairement audit couvercle 49.

Le dispositif de déplacement 42 est configuré pour déplacer la source lumineuse 30 afin que la source lumineuse 30 soit apte à émettre le faisceau lumineux 50 depuis les différentes positions d'émission $P_1$, $P_2$, ..., $P_N$. Le dispositif de déplacement 42 est de préférence configuré pour déplacer la source lumineuse 30 suivant une direction perpendiculaire à la direction d'éclairement. Dans l'exemple de la figure 1, le déplacement de la source lumineuse 30 s'effectue suivant une direction horizontale, perpendiculaire à la direction verticale Z d'éclairement.

Le dispositif de déplacement 42 comporte par exemple un rail de guidage 74 s'étendant suivant ladite direction perpendiculaire à la direction d'éclairement et un chariot 76 solidaire de la source lumineuse 30, le chariot 76 étant configuré pour se déplacer le long du rail de guidage 74.

En complément facultatif de la variante avec plusieurs sources lumineuses 30, au moins une source lumineuse 30 est associée à plusieurs positions d'émission du faisceau lumineux 50, et le dispositif de déplacement 42 est alors configuré pour déplacer chaque source lumineuse 30 à plusieurs positions d'émission, afin que chaque source lumineuse 30 à plusieurs positions d'émission soit apte à émettre le faisceau lumineux 50 depuis lesdites positions d'émission.

L'homme du métier comprendra alors que le système d'imagerie 20 selon l'invention est un système d'imagerie sans lentille, adapté pour acquérir toute image comportant une ou plusieurs figures de diffraction élémentaires, chaque figure de diffraction élémentaire correspondant à des ondes diffractées par une particule 45 lors de l'éclairement de l'échantillon 24, quel que soit le type de particule 45, et de manière générale quel que soit le type échantillon 24.

La paroi latérale 48 est, par exemple, sensiblement parallèle à la direction d'éclairement, c'est-à-dire à la direction verticale Z dans l'exemple des figures 1 à 3.

Le logiciel de calcul 60 forme un module de calcul de l'image résultante $I_R$ à partir des images acquises $I_1$, $I_2$, ..., $I_N$ de l'échantillon 24. En variante, le module de calcul 60 est réalisé sous forme d'un composant logique programmable, ou encore sous forme d'un circuit intégré dédié.

Le logiciel de calcul 60 est configuré pour calculer l'image résultante $I_R$ à partir des différentes images acquises $I_1$, $I_2$, ..., $I_N$, ou autrement dit pour calculer l'image résultante $I_R$ par combinaison des images acquises $I_1$, $I_2$, ..., $I_N$.

Le logiciel de calcul 60 est, par exemple, configuré pour calculer, pour chaque pixel $I_R(x,y)$ de l'image résultante $I_R$, une valeur de l'intensité égale au minimum, pour un pixel correspondant, des valeurs d'intensité des différentes images acquises $I_1$, $I_2$, ..., $I_N$.

L'intensité de chaque pixel $I_R(x,y)$ de l'image résultante $I_R$ vérifie alors par exemple l'équation suivante :

$$I_R(x, y) = Min_{i \in [1,N]}(I_i(x, y)) \tag{1}$$

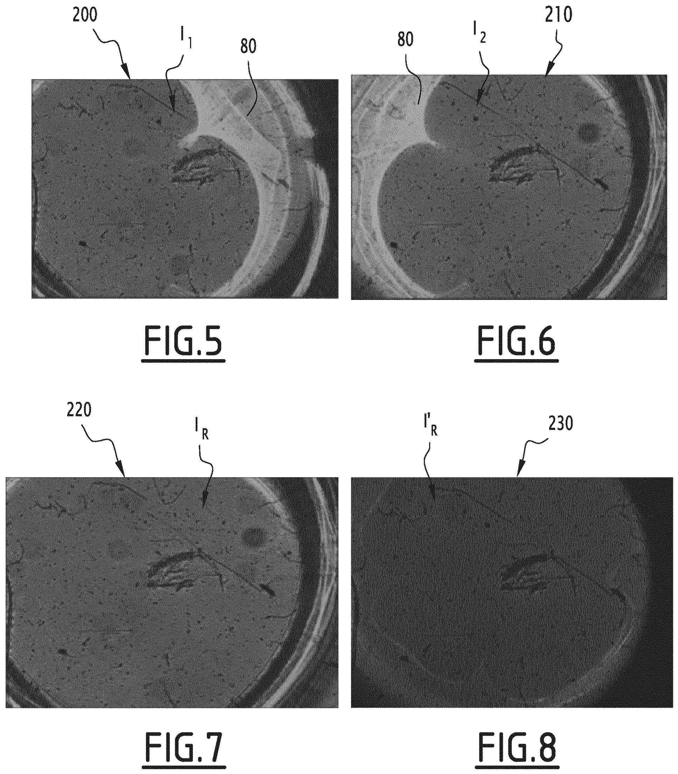

En variante, le logiciel de calcul 60 est configuré pour détecter une zone d'une image acquise $I_1$, $I_2$ comportant un artefact lumineux 80, l'artefact lumineux 80 présentant une intensité supérieure à un seuil prédéfini, comme représenté sur les figures 5 et 6. Le logiciel de calcul 60 est ensuite configuré pour remplacer, dans l'image résultante $I_R$, ladite zone détectée comportant l'artefact lumineux 80 par une zone correspondante d'une autre image acquise $I_2$, $I_1$, ladite zone correspondante ne comportant pas d'artefact lumineux.

Selon cette variante, le logiciel de calcul 60 est configuré pour, dans l'exemple des figures 5 et 6, détecter l'artefact 80 sur la droite d'une première image acquise $I_1$, et le remplacer par la zone correspondante d'une deuxième image acquise $I_2$, la deuxième image acquise $I_2$ ne comportant pas d'artefact à cet endroit, de par le décalage selon la direction perpendiculaire à la direction d'éclairement entre les première et deuxième positions d'émission $P_1$, $P_2$ correspondant respectivement aux première et deuxième images acquises $I_1$, $I_2$.

L'homme du métier notera bien entendu qu'alternativement, en partant de la deuxième image acquise $I_2$, le logiciel de calcul 60 est configuré pour détecter l'artefact 80 sur la gauche de la deuxième image acquise $I_2$, et le remplacer par la zone correspondante de la première image acquise $I_1$, la première image acquise $I_1$ ne comportant pas d'artefact à cet endroit, de par le décalage entre les première et deuxième positions d'émission $P_1$, $P_2$.

Selon cette variante, le logiciel de calcul 60 est configuré pour détecter le ou les artefacts 80 par seuillage dans l'image acquise correspondante. En complément, le logiciel de calcul 60 est configuré pour élargir la zone détectée initialement, par exemple de quelques pixels sur toute la périphérie de la zone détectée. L'homme du métier observera que la zone détectée par le logiciel de calcul 60 et remplacée par une zone de dimensions identiques, issue d'une autre image acquise, est susceptible de présenter n'importe quelle forme, la détection s'effectuant pixel par pixel, et n'est en particulier pas nécessairement rectangulaire.

L'homme du métier comprendra alors que le système d'imagerie 20 selon l'invention est adapté pour tout type d'application mettant en œuvre un système d'imagerie sans lentille, le système d'imagerie 20 selon l'invention permettant d'améliorer la qualité des images acquises par le photodétecteur matriciel 32, comme cela va être décrit à présent en regard des figures 5 à 8, et ce quel que soit le type d'application ultérieure à partir de l'image déterminée par le système d'imagerie 20.

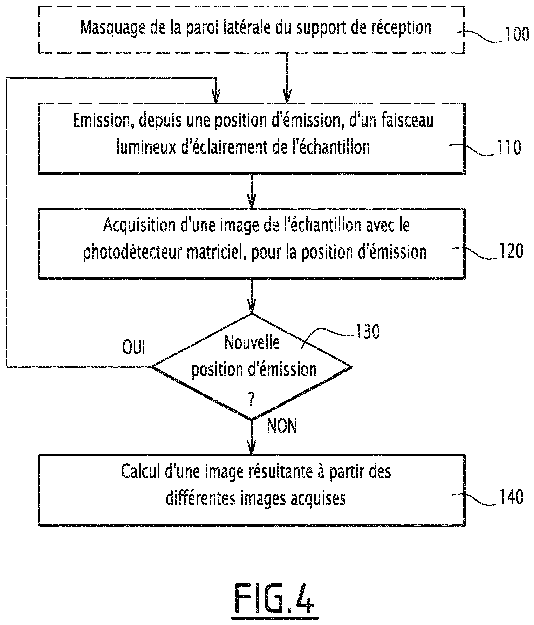

Le fonctionnement du système d'imagerie 20 selon l'invention va être à présent décrit à l'aide de la figure 4 représentant un organigramme du procédé d'obtention selon l'invention.

Lors d'une étape initiale 100 facultative, la paroi latérale 48 du support d'échantillon 26 est au moins partiellement masquée par le masque 40, interposé entre la source lumineuse 30 et le support d'échantillon 26. La partie opaque 70 du masque est alors agencée spatialement pour empêcher que la paroi latérale 48 soit, lors de l'étape suivante 110 d'éclairement de l'échantillon 24, illuminée par une partie du faisceau lumineux émis 50 n'ayant pas interagi avec l'échantillon 24.

L'étape de masquage 100 permet d'assurer que le faisceau lumineux 50 illumine moins, voire n'illumine pas, la paroi latérale 48 du support d'échantillon 26 avant d'atteindre l'échantillon 24. Il est ainsi limité, voire évité, que la paroi 48 redirige une partie de la lumière, à laquelle la paroi 48 est exposée, dans l'échantillon 24 analysé. L'expérience montre que les images ainsi obtenues conduisent à de meilleurs résultats, comme cela est visible sur la figure 8 qui présente une image résultante obtenue suite à la mise en œuvre de cette étape préliminaire facultative de masquage 100, l'image résultante étant alors notée $I'_R$.

Lors de l'étape suivante 110, le faisceau lumineux 50 est émis, par la source lumineuse 30 correspondante, depuis la première position d'émission $P_1$ pour éclairer l'échantillon 24.

La première image $I_1$ de l'échantillon 24 est ensuite acquise lors de l'étape 120 par le photodétecteur matriciel 32, et la première image acquise $I_1$ correspond alors à la première position d'émission $P_1$.

Lors de l'étape suivante 130, il est déterminé si il est nécessaire d'émettre le faisceau lumineux 50 depuis une nouvelle position d'émission, ce qui est vérifié tant que le nombre prédéterminé N de positions d'émission $P_1$, $P_2$, ..., $P_N$ n'a pas été atteint.

Le nombre N étant, comme indiqué précédemment, supérieur ou égal à 2, il est nécessairement déterminé, lors de la première réalisation de l'étape 130 à l'issue de la première réalisation des étapes 110 d'émission et 120 d'acquisition, qu'une nouvelle position d'émission, à savoir la deuxième position d'émission $P_2$, est nécessaire, et le procédé retourne alors à l'étape 110 pour émettre le faisceau lumineux 50 d'éclairement de l'échantillon 24 depuis la deuxième position d'émission $P_2$.

La deuxième image $I_2$ de l'échantillon 24 est ensuite acquise lors de la nouvelle étape 120 par le photodétecteur matriciel 32, et la deuxième image acquise $I_2$ correspond alors à la deuxième position d'émission $P_2$.

Lors de la nouvelle étape 130, si le nombre prédéterminé N de positions d'émission est égal à 2, il n'est pas nécessaire d'émettre le faisceau lumineux 50 depuis une nouvelle position d'émission, et le procédé passe à l'étape 140 au cours de laquelle le module de calcul 60 calcule l'image résultante $I_R$. Sinon, si le nombre prédéterminé N est supérieur ou égal à 3, le procédé retourne alors à l'étape 110 pour émettre le faisceau lumineux 50 d'éclairement de l'échantillon 24 depuis une troisième position d'émission $P_3$, et les étapes 110, 120 et 130 sont réitérées jusqu'à ce que le nombre de positions d'émission $P_1$, $P_2$, ..., $P_N$ depuis lesquelles le faisceau lumineux 50 aura été émis, soit égal au nombre prédéterminé N.

Lors de l'étape de calcul 140, le module de calcul 60 combine alors les différentes images acquises $I_1$, $I_2$, ..., $I_N$ pour obtenir l'image résultante $I_R$ de l'échantillon 24. Lors de l'étape de calcul 140, pour chaque pixel de l'image résultante calculée $I_R$, la valeur de l'intensité est par exemple égale au minimum, pour un pixel correspondant, des valeurs d'intensité des différentes images acquises $I_1$, $I_2$, ..., $I_N$.

En variante, l'étape de calcul 140 comprend la détection d'une zone d'une image acquise, telle qu'une zone de la première image acquise $I_1$, comportant au moins un artefact lumineux 80, puis le remplacement, dans l'image résultante $I_R$, de ladite zone détectée comportant le ou les artefacts lumineux 80 par une zone correspondante d'une autre image acquise, telle qu'une zone de la deuxième image $I_2$, ladite zone correspondante ne comportant pas d'artefact lumineux, de par le décalage entre les première et deuxième postions d'émission $P_1$, $P_2$ selon la direction perpendiculaire à la direction d'éclairement Z.

On remarque alors dans l'exemple des figures 5 et 6, que chaque image acquise $I_1$, $I_2$ comporte un artefact lumineux 80 particulièrement gênant, la figure 5 représentant une vue 200 de la première image acquise $I_1$, et la figure 6 représentant une vue 210 de la deuxième image acquise $I_2$.

Le fait de calculer, selon l'invention, l'image résultante $I_R$ de l'échantillon 24 à partir des différentes images acquises $I_1$, $I_2$ permet alors de réduire de manière très importante la présence d'artefact lumineux, comme cela est visible sur la figure 7 représentant une vue 220 de l'image résultante $I_R$. L'image résultante $I_R$ de la vue 220 a été obtenue, à l'aide de l'équation (1), à partir des première et deuxième images acquises $I_1$, $I_2$ visibles respectivement sur

les figures 5 et 6.

Sur la figure 7, la vue 220 comporte alors seulement une bande de faible largeur en surintensité, c'est-à-dire avec une intensité supérieure au seuil prédéfini, et l'image résultante $I_R$ obtenue est alors bien plus facilement exploitable que les images acquises $I_1$, $I_2$, par exemple pour détecter les particules 45 dans l'échantillon 24.

L'homme du métier observera en outre que l'utilisation du masque 40, en complément facultatif, avec sa mise en place le cas échéant lors de l'étape initiale 100, permet d'obtenir une image résultante $I'_R$ de qualité encore meilleure, comme cela est visible sur la figure 8 représentant une vue 230 de l'image résultante $I'_R$ obtenue avec la mise en œuvre du masque 40. Sur la figure 8, la vue 230 ne comporte alors plus aucun artefact lumineux, ni aucune une bande en surintensité, et l'image résultante $I'_R$ obtenue est alors encore plus facilement exploitable.

On conçoit ainsi que le procédé d'obtention et le système d'imagerie 20 selon l'invention permettent d'obtenir une image $I_R$, $I'_R$ de meilleure qualité, ce qui facilite ensuite notamment la détection des particules 45 contenues dans l'échantillon 24.

## Revendications

**1.** Procédé d'obtention d'une image ($I_R$, $I'_R$) d'un échantillon (24), à l'aide d'un système d'imagerie (20) comprenant au moins une source lumineuse (30), un support d'échantillon (26) configuré pour recevoir l'échantillon (24) et un photodétecteur matriciel (32), le support d'échantillon (26) étant disposé entre chaque source lumineuse (30) et le photodétecteur matriciel (32),

le procédé comprenant les étapes suivantes :

- a) l'émission (110), depuis différentes positions d'émission ($P_1$, $P_2$, ..., $P_N$) par rapport au support (26) d'échantillon, d'un faisceau lumineux d'éclairement de l'échantillon (24) selon une direction d'éclairement (Z), à l'aide d'une source lumineuse (30), les différentes positions d'émission ($P_1$, $P_2$, ..., $P_N$) étant décalées les unes par rapport aux autres selon une direction perpendiculaire à la direction d'éclairement (Z),

dans lequel les positions d'émission ($P_1$, $P_2$) sont décalées par paire(s), et les deux positions ($P_1$, $P_2$) de chaque paire respective sont décalées par rapport à un axe (M) passant sensiblement par le milieu de l'échantillon (24) et parallèle à la direction d'éclairement (Z),

- b) l'acquisition (120) de plusieurs images successives ($I_1$, $I_2$, ..., $I_N$) de l'échantillon (24) à l'aide du photodétecteur matriciel (32), chaque image ($I_1$, $I_2$, ..., $I_N$) étant formée par un rayonnement transmis par l'échantillon éclairé (24) et comportant au moins une figure de diffraction élémentaire, chaque figure de diffraction élémentaire correspondant à des ondes diffractées lors de l'éclairement de l'échantillon (24),

chaque image acquise ($I_1$, $I_2$, ..., $I_N$) correspondant à une position respective ($P_1$, $P_2$, ..., $P_N$) d'émission du faisceau lumineux (50) par rapport audit support d'échantillon (26),

- c) le calcul (140) d'une image résultante ($I_R$, $I'_R$) de l'échantillon (24) à partir des différentes images acquises ($I_1$, $I_2$, ..., $I_N$), characterisé en ce que l'étape c) comprend :

- la détection d'une zone d'une image acquise ($I_1$) comportant un artefact lumineux (80), l'artefact lumineux (80) présentant une intensité supérieure à un seuil prédéfini, et

- le remplacement, dans l'image résultante ($I_R$, $I'_R$), de ladite zone détectée comportant l'artefact lumineux (80) par une zone correspondante d'une autre image acquise ($I_2$), ladite zone correspondante ne comportant pas d'artefact lumineux.

**2.** Procédé selon la revendication 1, dans lequel chaque image ($I_1$, $I_2$, ..., $I_N$, $I_R$, $I'_R$) comporte une pluralité des pixels, et lors de l'étape c), pour chaque pixel de l'image résultante calculée ($I_R$, $I'_R$), la valeur de l'intensité est égale au minimum, pour un pixel correspondant, des valeurs d'intensité des différentes images acquises ($I_1$, $I_2$, ..., $I_N$).

**3.** Procédé selon l'une quelconque des revendications précédentes, dans lequel le support d'échantillon (26) comporte une paroi latérale (48), et

le procédé comporte en outre une étape (100) de masquage, au moins partiellement, de la paroi latérale (48) du support d'échantillon (26) par interposition d'un masque (40) entre chaque source lumineuse (30) et l'échantillon (24), l'étape de masquage (100) étant préalable à l'étape a), et le masque (40) comportant une partie opaque (70), la partie opaque (70) étant agencée spatialement pour empêcher que la paroi latérale (48) soit, lors de l'étape a), illuminée par une partie du faisceau lumineux émis (50) n'ayant pas interagi avec l'échantillon (24).

**4.** Procédé selon l'une quelconque des revendications précédentes, dans lequel les différentes positions d'émission ($P_1$, $P_2$, ..., $P_N$) sont régulièrement espacées selon la direction perpendiculaire à la direction d'éclairement (Z).

**5.** Procédé selon l'une quelconque des revendications précédentes, dans lequel les deux positions ($P_1$, $P_2$) de chaque paire respective sont décalées de manière symétrique par rapport à l'axe (M) passant sensiblement par le milieu de l'échantillon (24) et parallèle à la direction d'éclairement (Z).

**6.** Procédé selon la revendication 5, dans lequel les deux positions ($P_1$, $P_2$) de chaque paire respective sont positionnées de manière symétrique par rapport audit axe (M).

**7.** Procédé selon l'une des revendications précédentes, dans lequel deux positions d'émission différentes par rapport au support d'échantillon (26) sont obtenues :

- soit en déplaçant le support d'échantillon (26) par rapport à une source lumineuse (30),
- soit en déplaçant une source lumineuse (30) par rapport au support d'échantillon (26), ou
- soit en activant successivement deux sources lumineuses espacées l'une de l'autre.

**8.** Système d'imagerie (20) comprenant :

- un support d'échantillon (26) configuré pour recevoir un échantillon (24),
- au moins une source lumineuse (30) configurée pour émettre, depuis différentes positions d'émission ($P_1$, $P_2$, ..., $P_N$), un faisceau lumineux (50) d'éclairement de l'échantillon (24) selon une direction d'éclairement (Z), les différentes positions d'émission ($P_1$, $P_2$, ..., $P_N$) étant décalées les unes par rapport aux autres selon une direction perpendiculaire à la direction d'éclairement (Z),
dans lequel les positions d'émission ($P_1$, $P_2$) sont décalées par paire(s), et les deux positions ($P_1$, $P_2$) de chaque paire respective sont décalées par rapport à un axe (M) passant sensiblement par le milieu de l'échantillon (24) et parallèle à la direction d'éclairement (Z),
- un photodétecteur matriciel (32) configuré pour acquérir plusieurs images successives ($I_1$, $I_2$, ..., $I_N$) de l'échantillon éclairé (24), chaque image ($I_1$, $I_2$, ..., $I_N$) étant formée par un rayonnement transmis par l'échantillon éclairé (24) et comportant au moins une figure de diffraction élémentaire, chaque figure de diffraction élémentaire correspondant à des ondes diffractées lors de l'éclairement de l'échantillon (24),
chaque image acquise ($I_1$, $I_2$, ..., $I_N$) correspondant à une position respective ($P_1$, $P_2$, ..., $P_N$) d'émission du faisceau lumineux par rapport au support d'échantillon (26),
- une unité de traitement d'informations (34) configurée pour calculer une image résultante ($I_R$, $I'_R$) de l'échantillon (24) à partir des différentes images ($I_1$, $I_2$, ..., $I_N$) acquises par le photodétecteur matriciel (32),
characterisé en ce que
l'unité de traitement d'informations (34) est configurée en outre pour:

- détecter une zone d'une image acquise ($I_1$) comportant un artefact lumineux (80), l'artefact lumineux (80) présentant une intensité supérieure à un seuil prédéfini, et
- remplacer, dans l'image résultante ($I_R$, $I'_R$), ladite zone détectée comportant l'artefact lumineux (80) par une zone correspondante d'une autre image acquise ($I_2$), ladite zone correspondante ne comportant pas d'artefact lumineux.

**9.** Système (20) selon la revendication 8, dans lequel le système (20) comprend une source lumineuse (30) et en outre un dispositif (42) de déplacement de ladite source lumineuse (30) pour émettre le faisceau lumineux (50) depuis les différentes positions d'émission ($P_1$, $P_2$, ..., $P_N$).

**10.** Système (20) selon la revendication 8, dans lequel le système (20) comprend plusieurs sources lumineuses (30).

**11.** Système (20) selon la revendication 8, dans lequel le système (20) en outre un dispositif (42) de déplacement dudit support d'échantillon (26) pour émettre le faisceau lumineux (50) depuis les différentes positions d'émission ($P_1$, $P_2$, ..., $P_N$).

**12.** Système (20) selon la revendication 10, dans lequel au moins une source lumineuse (30) est associée à plusieurs positions d'émission, et le système (20) comprend en outre un dispositif (42) de déplacement de chaque source lumineuse (30) associée à plusieurs positions d'émission pour émettre le faisceau lumineux (50) depuis lesdites positions d'émission.

**13.** Système (20) selon l'une quelconque des revendications 8 à 12, dans lequel le support d'échantillon (26) comporte une paroi latérale (48), et le système (20) comprend en outre un masque (40) interposé entre chaque source lumineuse (30) et l'échantillon (24), le masque (40) comprenant une partie opaque (70), la partie opaque (70) étant propre à être agencée spatialement pour empêcher que la paroi latérale (48) soit illuminée par une partie du faisceau lumineux émis (50) n'ayant pas interagi avec l'échantillon (24).

**Patentansprüche**

1. Verfahren zum Beschaffen eines Bildes ($I_R$, $I'_R$) einer Probe (24) mit Hilfe eines Bildgebungssystems (20), das mindestens eine Lichtquelle (30), einen Probenhalter (26), der ausgebildet ist, die Probe (24) aufzunehmen, und einen Matrix-Photodetektor (32) umfasst, wobei der Probenhalter (26) zwischen jeder Lichtquelle (30) und dem Matrix-Photodetektor (32) angeordnet ist,
wobei das Verfahren die folgenden Schritte umfasst:

   - a) Aussenden (110) von unterschiedlichen Abstrahlpositionen ($P_1$, $P_2$, ..., $P_N$) in Bezug auf den Probenhalter (26) eines Lichtbündels zur Beleuchtung der Probe (24) gemäß einer Strahlungsrichtung (Z) mithilfe einer Lichtquelle (30), wobei die unterschiedlichen Abstrahlpositionen ($P_1$, $P_2$, ..., $P_N$) zueinander gemäß einer zur Strahlungsrichtung (Z) senkrechten Richtung versetzt sind,
   wobei die Abstrahlpositionen ($P_1$, $P_2$) paarweise versetzt sind und die zwei Positionen ($P_1$, $P_2$) jedes jeweiligen Paars in Bezug auf eine Achse (M) versetzt sind, die im Wesentlichen durch die Mitte der Probe (24) hindurchgeht und parallel zur Strahlungsrichtung (Z) liegt,
   - b) Beschaffen (120) von mehreren aufeinanderfolgenden Bildern ($I_1$, $I_2$, ..., $I_N$) der Probe (24) mithilfe des Matrix-Photodetektors (32), wobei jedes Bild ($I_1$, $I_2$, ..., $I_N$) durch eine von der beleuchteten Probe (24) transmittierten Strahlung gebildet wird und mindestens ein elementares Beugungsmuster aufweist, wobei jedes elementare Beugungsmuster bei der Beleuchtung der Probe (24) gebeugten Wellen entspricht,
   wobei jedes beschaffte Bild ($I_1$, $I_2$, ..., $I_N$) einer jeweiligen Position ($P_1$, $P_2$, ..., $P_N$) der Abstrahlung des Lichtbündels (50) in Bezug auf den Probenhalter (26) entspricht,
   - c) Berechnen (140) eines resultierenden Bildes ($I_R$, $I'_R$) der Probe (24) aus den unterschiedlichen beschafften Bildern ($I_1$, $I_2$, ..., $I_N$),
   **dadurch gekennzeichnet, dass** der Schritt c) umfasst:
   - Detektieren einer Zone eines beschafften Bildes ($I_1$), die ein Lichtartefakt (80) aufweist, wobei das Lichtartefakt (80) eine Intensität größer als eine vorbestimmte Schwelle aufweist und
   - Ersetzen in dem resultierenden Bild ($I_R$, $I'_R$) der das Lichtartefakt (80) aufweisenden detektierten Zone durch eine entsprechende Zone eines anderen beschafften Bildes ($I_2$), wobei entsprechende Zone kein Lichtartefakt aufweist.

2. Verfahren nach Anspruch 1, bei dem jedes Bild ($I_1$, $I_2$, ..., $I_N$, $I_R$, $I'_R$) eine Mehrzahl von Pixeln aufweist und beim Schritt c) für jedes Pixel des berechneten resultierenden Bildes der Wert der Intensität für ein entsprechendes Pixel gleich dem Minimum der Intensitätswerte der verschiedenen beschafften Bilder ($I_1$, $I_2$, ..., $I_N$) ist.

3. Verfahren nach einem beliebigen der vorhergehenden Ansprüche, bei dem der Probenhalter (26) eine Seitenwand (48) aufweist und

   das Verfahren außerdem einen Schritt (100) des Maskierens der Seitenwand (48) des Probenhalters (26) zumindest teilweise durch Zwischenschalten einer Maske (40) zwischen jede Lichtquelle (30) und der Probe (24), wobei der Maskierungsschritt (100) vor dem Schritt a) liegt und die Maske (40) einen opaken Bereich (70) aufweist, wobei der opake Bereich (70) räumlich angeordnet ist, um zu verhindern, dass die Seitenwand (48) bei dem Schritt a) durch einen Teil des abgestrahlten Lichtbündels (50), der nicht mit der Probe (24) interagiert hat, beleuchtet wird.

4. Verfahren nach einem beliebigen der vorhergehenden Ansprüche, bei dem die verschiedenen Abstrahlpositionen ($P_1$, $P_2$, ..., $P_N$) gleichmäßig gemäß der Richtung senkrecht zur Strahlungsrichtung (Z) beabstandet sind.

5. Verfahren nach einem beliebigen der vorhergehenden Ansprüche, bei dem die zwei Positionen ($P_1$, $P_2$) jedes jeweiligen Paares symmetrisch in Bezug auf die Achse (M) versetzt sind, die im Wesentlichen durch die Mitte der Probe (24) und parallel zur Strahlungsrichtung (Z) hindurchgeht.

6. Verfahren nach Anspruch 5, bei dem die zwei Positionen ($P_1$, $P_2$) jedes jeweiligen Paares in symmetrischer Weise in Bezug auf die Achse (M) positioniert sind.

7.  Verfahren nach einem beliebigen der vorhergehenden Ansprüche, bei dem in Bezug auf den Probenhalter (26) zwei unterschiedliche Abstrahlpositionen erhalten werden:

    - sei es, indem der Probenhalter (26) in Bezug auf eine Lichtquelle (30) bewegt wird,
    - sei es, indem eine Lichtquelle (30) in Bezug auf den Probenhalter (26) bewegt wird, oder
    - sei es, indem aufeinanderfolgend zwei voneinander beabstandete Lichtquellen aktiviert werden.

8.  Bildgebungssystem (20), umfassend:

    - einen Probenhalter (26), der ausgebildet ist, eine Probe (24) aufzunehmen,
    - mindestens eine Lichtquelle (30), die ausgebildet ist, von unterschiedlichen Abstrahlpositionen $(P_1, P_2, ..., P_N)$ ein Lichtbündel zur Beleuchtung der Probe (24) gemäß einer Strahlungsrichtung (Z) auszusenden, wobei die unterschiedlichen Abstrahlpositionen $(P_1, P_2, ..., P_N)$ zueinander gemäß einer zur Strahlungsrichtung (Z) senkrechten Richtung versetzt sind,
    wobei die Abstrahlpositionen $(P_1, P_2)$ paarweise versetzt sind und die zwei Positionen $(P_1, P_2)$ jedes jeweiligen Paars in Bezug auf eine Achse (M) versetzt sind, die im Wesentlichen durch die Mitte der Probe (24) hindurchgeht und parallel zur Strahlungsrichtung (Z) liegt,
    - einen Matrix-Photodetektor (32), der ausgebildet ist, mehrere aufeinanderfolgende Bilder $(I_1, I_2, ..., I_N)$ der beleuchteten Probe (24) zu beschaffen, wobei jedes Bild $(I_1, I_2, ..., I_N)$ durch eine von der beleuchteten Probe (24) transmittierten Strahlung gebildet wird und mindestens ein elementares Beugungsmuster aufweist, wobei jedes elementare Beugungsmuster bei der Beleuchtung der Probe (24) gebeugten Wellen entspricht
    wobei jedes beschaffte Bild $(I_1, I_2, ..., I_N)$ einer jeweiligen Position $(P_1, P_2, ..., P_N)$ der Abstrahlung des Lichtbündels (50) in Bezug auf den Probenhalter (26) entspricht,
    - eine Informationsverarbeitungseinheit (34), die ausgebildet ist, ein resultierendes Bild $(I_R, I'_R)$ der Probe (24) aus den unterschiedlichen von dem Matrix-Photodetektor (32) beschafften Bildern $(I_1, I_2, ..., I_N)$ zu berechnen,

    **dadurch gekennzeichnet, dass** die Informationsverarbeitungseinheit außerdem ausgebildet ist zum:

    - Detektieren einer Zone eines beschafften Bildes $(I_1)$, die ein Lichtartefakt (80) aufweist, wobei das Lichtartefakt (80) eine Intensität größer als eine vorbestimmte Schwelle aufweist und
    - Ersetzen in dem resultierenden Bild $(I_R, I'_R)$ der das Lichtartefakt (80) aufweisenden detektierten Zone durch eine entsprechende Zone eines anderen beschafften Bildes $(I_2)$, wobei die entsprechende Zone kein Lichtartefakt aufweist.

9.  System (20) nach Anspruch 8, bei dem das System (20) eine Lichtquelle (30) und außerdem eine Vorrichtung (42) zum Bewegen der Lichtquelle (30) aufweist, um das Lichtbündel (50) von den unterschiedlichen Abstrahlpositionen $(P_1, P_2, ..., P_N)$ abzustrahlen.

10. System (20) nach Anspruch 8, bei dem das System (20) mehrere Lichtquellen (30) umfasst.

11. System (20) nach Anspruch 8, bei dem das System (20) außerdem eine Vorrichtung (42) zum Bewegen des Probenhalters (26) umfasst, um das Lichtbündel (50) von unterschiedlichen Abstrahlpositionen $(P_1, P_2, ..., P_N)$ abzustrahlen.

12. System (20) nach Anspruch 10, bei dem mindestens eine Lichtquelle (30) mehreren Abstrahlpositionen zugeordnet ist und das System (20) außerdem eine Vorrichtung (42) zum Bewegen jeder mehreren Abstrahlpositionen zugeordneten Lichtquelle (30) umfasst, um das Lichtbündel (50) von den Abstrahlpositionen abzustrahlen.

13. System (20) nach einem beliebigen der Ansprüche 8 bis 12, bei dem der Probenhalter (26) eine Seitenwand (48) aufweist und das System (20) außerdem eine Maske (40) umfasst, die zwischen jeder Lichtquelle (30) und der Probe (24) liegt, wobei die Maske (40) einen opaken Bereich (70) aufweist und der opake Bereich (70) geeignet ist, räumlich angeordnet zu werden, um zu verhindern, dass die Seitenwand (48) durch einen Teil des abgestrahlten Lichtbündels (50), der nicht mit der Probe (24) interagiert hat, beleuchtet wird.

## Claims

1.  Method for obtaining an image $(I_R, I'_R)$ of a sample (24) with the aid of an imaging system (20) comprising at least one light source (30), a sample support (26) which is configured to receive the sample (24), and a photodetector array (32), the sample support (26) being arranged between each light source (30) and the photodetector array (32), the method comprising the following steps:

- a) emission (110), from different emission positions ($P_1$, $P_2$, ..., $P_N$) relative to the sample support (26), of a light beam for illuminating the sample (24) in an illumination direction (Z) with the aid of a light source (30), the different emission positions ($P_1$, $P_2$, ..., $P_N$) being offset relative to one another in a direction perpendicular to the illumination direction (Z),
wherein the emission positions ($P_1$, $P_2$) are offset in (a) pair(s), and the two positions ($P_1$, $P_2$) of each respective pair are offset relative to an axis (M) which passes substantially through the middle of the sample (24) and is parallel to the illumination direction (Z),
- b) acquisition (120) of multiple successive images ($I_1$, $I_2$, ..., $I_N$) of the sample (24) with the aid of the photodetector array (32), each image ($I_1$, $I_2$, ..., $I_N$) being formed by a ray transmitted by the illuminated sample (24) and having at least one elementary diffraction pattern, each elementary diffraction pattern corresponding to waves diffracted on illumination of the sample (24),
each acquired image ($I_1$, $I_2$, ..., $I_N$) corresponding to a respective emission position ($P_1$, $P_2$, ..., $P_N$) of the light beam (50) relative to said sample support (26),
- c) calculation (140) of a resulting image ($I_R$, $I'_R$) of the sample (24) from the different acquired images ($I_1$, $I_2$, ..., $I_N$),

**characterised in that** step c) comprises:

- detection of a zone of an acquired image ($I_1$) that comprises a light artefact (80), the light artefact (80) having an intensity greater than a predefined threshold, and
- replacement, in the resulting image ($I_R$, $I'_R$), of said detected zone that comprises the light artefact (80) by a corresponding zone of a different acquired image ($I_2$), said corresponding zone not having a light artefact.

2. Method according to claim 1, wherein each image ($I_1$, $I_2$, ..., $I_N$, $I_R$, $I'_R$) has a plurality of pixels, and in step c), for each pixel of the calculated resulting image ($I_R$, $I'_R$), the value of the intensity is equal to the minimum, for a corresponding pixel, of the intensity values of the different acquired images ($I_1$, $I_2$, ..., $I_N$).

3. Method according to any one of the preceding claims, wherein the sample support (26) comprises a lateral wall (48), and
the method further comprises a step (100) of masking, at least partially, the lateral wall (48) of the sample support (26) by interposing a mask (40) between each light source (30) and the sample (24),
the masking step (100) preceding step a), and the mask (40) comprising an opaque portion (70), the opaque portion (70) being spatially arranged to prevent the lateral wall (48) from being illuminated in step a) by a portion of the emitted light beam (50) that has not interacted with the sample (24).

4. Method according to any one of the preceding claims, wherein the different emission positions ($P_1$, $P_2$, ..., $P_N$) are evenly spaced in the direction perpendicular to the illumination direction (Z).

5. Method according to any one of the preceding claims, wherein the two positions ($P_1$, $P_2$) of each respective pair are offset symmetrically relative to the axis (M) which passes substantially through the middle of the sample (24) and is parallel to the illumination direction (Z).

6. Method according to claim 5, wherein the two positions ($P_1$, $P_2$) of each respective pair are positioned symmetrically relative to said axis (M).

7. Method according to any one of the preceding claims, wherein two different emission positions relative to the sample support (26) are obtained:

- by displacing the sample support (26) relative to a light source (30),
- or by displacing a light source (30) relative to the sample support (26), or
- by activating in succession two light sources which are spaced apart from one another.

8. Imaging system (20) comprising:

- a sample support (26) which is configured to receive a sample (24),
- at least one light source (30) which is configured to emit, from different emission positions ($P_1$, $P_2$, ..., $P_N$), a light beam (50) for illuminating the sample (24) in an illumination direction (Z), the different emission positions ($P_1$, $P_2$, ..., $P_N$) being offset relative to one another in a direction perpendicular to the illumination direction (Z), wherein the emission positions ($P_1$, $P_2$) are offset in (a) pair(s), and the two positions ($P_1$, $P_2$) of each respective pair are offset relative to an axis (M) which passes substantially through the middle of the sample (24) and is parallel to the illumination direction (Z),
- a photodetector array (32) which is configured to acquire multiple successive images ($I_1$, $I_2$, ..., $I_N$) of the illuminated sample (24), each image ($I_1$, $I_2$, ..., $I_N$) being formed by a ray transmitted by the illuminated sample (24) and having at least one elementary diffraction pattern, each elementary diffraction pattern corresponding to waves diffracted on illumination of the sample (24),
each acquired image ($I_1$, $I_2$, ..., $I_N$) corresponding to a respective emission position ($P_1$, $P_2$, ..., $P_N$) of the light beam relative to the sample support (26),
- an information processing unit (34) which is configured to calculate a resulting image ($I_R$, $I'_R$) of the sample (24) from the different images ($I_1$, $I_2$, ..., $I_N$) acquired by the photodetector array (32),
**characterised in that**

the information processing unit (34) is further configured to:

- detect a zone of an acquired image ($I_1$) that comprises a light artefact (80), the light artefact (80) having an intensity greater than a predefined threshold, and
- replace, in the resulting image ($I_R$, $I'_R$), said detected zone that comprises the light artefact (80) by a corresponding zone of a different acquired image ($I_2$), said corresponding zone not having a light artefact.

9. System (20) according to claim 8, wherein the system (20) comprises a light source (30) and, further, a device (42) for displacing said light source (30) in order to emit the light beam (50) from the different emission positions ($P_1$, $P_2$, ..., $P_N$).

10. System (20) according to claim 8, wherein the system (20) comprises multiple light sources (30).

11. System (20) according to claim 8, wherein the system (20) further comprises a device (42) for displacing said sample support (26) in order to emit the light beam (50) from the different emission positions ($P_1$, $P_2$, ..., $P_N$).

12. System (20) according to claim 10, wherein at least one light source (30) is associated with multiple emission positions, and the system (20) further comprises a device (42) for displacing each light source (30) associated with multiple emission positions in order to emit the light beam (50) from said emission positions.

13. System (20) according to any one of claims 8 to 12, wherein the sample support (26) comprises a lateral wall (48), and the system (20) further comprises a mask (40) which is interposed between each light source (30) and the sample (24), the mask (40) comprising an opaque portion (70), the opaque portion (70) being capable of being spatially arranged in order to prevent the lateral wall (48) from being illuminated by a portion of the emitted light beam (50) that has not interacted with the sample (24).

FIG.1

FIG.2

FIG.3

Masquage de la paroi latérale du support de réception — 100

Emission, depuis une position d'émission, d'un faisceau lumineux d'éclairement de l'échantillon — 110

Acquisition d'une image de l'échantillon avec le photodétecteur matriciel, pour la position d'émission — 120

— 130

OUI Nouvelle position d'émission ?

NON

Calcul d'une image résultante à partir des différentes images acquises — 140

## FIG.4

## FIG.5

## FIG.6

## FIG.7

## FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2122326 B1
- US 20120248292 A1
- WO 2014012031 A